# EUROPEAN PATENT APPLICATION

(11) **EP 3 072 596 A1**
(43) Date of publication of application: **28.09.2016**
(21) Application number: 15160843.7
(22) Date of filing: 25.03.2015
(51) Int. Cl.: B01L 3/00, C12N 15/10

(54) **Portable device**

(71) Applicant: International Iberian Nanotechnology Laboratory, 4715-330 Braga (PT)
(72) Inventor: Prado, Marta, 4715-330 Braga (PT); Dieguez, Lorena, 4715-330 Braga (PT); Freitas, Paulo, 4715-330 Braga (PT); Montelius, Lars, 4715-330 Braga (PT)
(74) Representative: Awapatent AB

(57) **Abstract**

The present invention relates to a portable device for separation of DNA or RNA from a liquid sample. The portable device comprising a chip comprising a tubular flow channel having an opening arranged for introducing a liquid sample into the tubular flow channel, and a flow generator, wherein a separation surface of the tubular flow channel at least partially is coated with chitosan for reversible binding of DNA or RNA of the liquid sample, and the flow generator being arranged for introducing the liquid sample through the opening into the tubular flow channel, and introducing the liquid sample to the chitosan, such that DNA or RNA is reversibly bound to the chitosan. The present invention further relates to a method for manufacturing of a chip, a chip, and a use of the device.

## Description

### Field of invention

The present invention relates to a portable device for separation of DNA or RNA from a liquid sample. The present invention further relates to a chip for separation of DNA or RNA from a liquid sample, and a method for manufacturing of a chip for separation of DNA or RNA from a liquid sample.

### Technical background

Quantitative and qualitative analysis of DNA or RNA from various samples are known procedures. Commonly it is of interest to analyse DNA or RNA present in complex sample matrices, such as biological samples, for example food samples, environmental samples, and clinical samples, and DNA often is present in low concentrations or amounts in the samples, which makes the analysis problematic or complicated.

Further, equipments used for DNA analysis may be bulky and inefficient, which makes analysis inefficient, particularly with situations where the samples are collected from a plurality of spread locations or field sampling.

It is desired to provide for efficient analysis of DNA or RNA from complex sample matrices. It is further desired to provide for efficient analysis of low abundant DNA or RNA in complex matrices. Yet further, it is desired to provide for equipment which is efficient in terms of manufacturing, handling, and operation.

### Summary of invention

An object of the present invention is to provide efficient analysis of or separation of DNA or RNA from a liquid sample without disadvantages of prior art.

Another object of the present invention is to provide an efficient portable device for separation of DNA or RNA from a liquid sample.

Yet another object of the present invention is to provide an efficient chip for separation of DNA or RNA from a liquid sample.

Yet another object of the present invention is to provide an efficient method for manufacturing of a chip for separation of DNA or RNA from a liquid sample.

Particularly, devices for analysis and analysis of DNA or RNA from complex sample matrices are included in objects for the present invention.

The devices and methods according to aspects described herein provides for analysis of DNA and RNA also when present in sample matrices which may be considered as complex for example in that they comprise considerable amount of contaminants.

According to a first aspect, there is provided a portable device for separation of DNA or RNA from a liquid sample. The portable device comprising a chip comprising a tubular flow channel having an opening arranged for introducing a liquid sample into the tubular flow channel, and a flow generator, wherein a separation surface of the tubular flow channel at least partially is coated with chitosan for reversible binding of DNA or RNA of the liquid sample, and the flow generator being arranged for introducing the liquid sample through the opening into the tubular flow channel, and introducing the liquid sample to the chitosan, such that DNA or RNA is reversibly bound to the chitosan.

A portable device may efficiently be handled and provides for efficient analysis of DNA or RNA from samples, for example on the site where the sample is sampled.

A chip is efficient in that it allows for compact and portable analytical devices, and provides for the possibility of efficient handling of minute sample volumes. Further, a chip may efficiently be replaced with a new chip if desired.

A tubular flow channel allows for efficient separation of DNA or RNA from a liquid sample on the chip.

A flow generator is efficient for introducing samples and separation liquids into the tubular flow channel.

The tubular flow channel having a separation surface provides for separation of DNA or RNA from other components present in the liquid sample.

The separation surface being coated with chitosan provides for efficient reversible binding of DNA or RNA to the separation surface, and thereby provides for efficient separation of DNA or RNA from other sample components.

Reversible binding of DNA or RNA allows for efficient elution of DNA or RNA from the tubular flow channel and thereby allows for separation of DNA or RNA from the liquid sample and further treatment of the DNA or RNA.

It is understood that separation of DNA or RNA from a liquid sample allows for efficient analysis of the DNA or RNA. The device may, thus, not only suitable for separation of the DNA or RNA from a liquid sample, but also for analysis of DNA or RNA from a liquid sample.

The separation surface may comprise a microstructure coated with chitosan. Such a microstructure provides for a high surface to volume ratio, and thus efficient separation of DNA or RNA from the sample.

At least a major part of the chip including the microstructure may be made of PDMS. With PDMS is intended polydimethylsiloxane. The PDMS is an efficient material for the chip. For example, it provides versatility to the chip including benefits such as that higher flow rates may be provided through the tubular flow channel and the microstructure, as compared to for example if the chip was made of PMMA instead of PDMS. Further, the use of PDMS enables efficient manufacturing by molding.

A major part of the chip may be a major part by weight of the chip. The chitosan may be bonded to the separation surface by a linker thereby providing an efficient bond between the chitosan and the separation surface.

The linker may be GPTMS.

The linker being GPTMS provides a strong bond between the separation surface and the chitosan. Thus a robust separation surface is realised.

The separation surface may correspond to at least a part of the internal surface of the tubular flow channel. The separation surface may correspond to essentially the entire internal surface of the tubular flow channel.

The microstructure may comprise pillars. The pillars provide a large surface to volume ratio and efficient separation of DNA and RNA from the sample. The pillars may further, by their arrangement, direct liquid in the tubular flow channel to provide a suitable flow and an appropriate mixing through the tubular flow channel. Further, the pillars provides for an efficient coating of the separation surface with chitosan. The pillars may be defined as being rod-shaped, or cylindrically shaped. The cross-section of the pillars may be of any suitable shape, for example, circular or star-shaped.

The pillars may have diameters in the range of 50 micrometers or below, such as 5 to 25 micrometers, or 10 to 20 micrometers.

The pillars may have heights in the range of 250 micrometers or below, such as 100 to 10 micrometers, or 75 to 25 micrometers.

The height of the pillars may be essentially equal to a height of the tubular flow channel.

The distance between two adjacent pillars may be in the range of 1 to 200 micrometers, such as 1 to 50 micrometers, for example 5 to 20 micrometers. The distance between adjacent pillars may decrease along the separation surface and the extension of the tubular flow channel. For example, in an introducing end of the separation surface where the sample is introduced to the separation surface, the distance between adjacent pillars may be for example 20 micrometers, and in the opposite end of the separation surface the distance between adjacent pillars may be for example 5 micrometers. Such an arrangement provides for efficient separation and reduced risk of for example clogging of the separation surface.

The provided dimensions of the pillars and the distances between them provides for efficient analysis of DNA or RNA, particularly from complex sample matrices.

The pillars may be arranged in rows perpendicular to a flow direction through the tubular flow channel, wherein the rows are being geometrically arranged by a shift in every row wherein the shift is equal to ((diameter of pillars + spacing between pillars)/2). Such an arrangement provides an increased surface contact area between DNA/RNA and chitosan.

The portable device may further comprise an amplifier arranged to amplify DNA or RNA eluted from the tubular flow channel.

Thus, the amount of DNA or RNA from the sample may be increased by amplification.

The amplifier may be a PCR amplifier. The amplifier may be, for example, any suitable device, means or performer of PCR, digital PCR (dPCR), Ligase chain reaction (LCR), loop-mediated isothermal amplification (LAMP), rolling circle amplification (RCA), or other suitable amplification techniques, or combinations thereof.

The portable device may further comprise a detector for qualitative or quantitative analysis of DNA or RNA eluted from the tubular flow channel.

The detector may be an optical detector, such as a fluorescent detector, or an absorbance detector, such as a UV-absorbance detector.

The portable device may further comprise a sample pre-treator for removal of contaminants from the liquid sample prior to introducing the liquid sample into the tubular flow channel.

The sample pre-treator may be any suitable device or means for performing solid phase extraction in order to remove contaminants from the liquid sample. For example, it may be a solid phase extraction (SPE) column, such as a microSPE column, or other suitable pre-treators comprising a solid phase. Thus, the SPE column may refer to a column or a chip for SPE.

The sample pre-treator is useful for cleaning the liquid sample such as by removing contaminants, for example samle matrix compounds, from the liquid sample. Thus, a cleaner sample liquid may be introduced into the flow channel of the chip, resulting in more efficient separation of DNA or RNA, and reduced risk of contaminating or clogging the tubular flow channel.

The sample pre-treator may be arranged for treating the liquid sample prior to the liquid sample being introduced into the tubular flow channel.

The flow generator may further be arranged for introducing liquids to and or from anyone of the pre-treator, the amplifier, and the detector.

The portable device may be a micro total analysis system.

The opening may be arranged in a first portion of the tubular flow channel, and the tubular flow channel may further comprise an additional opening arranged in a second portion of the tubular flow channel.

The flow generator may be connected to the additional opening.

The flow generator may be arranged connected indirectly or directly to the additional opening, thereby arranged for suction of liquid, such as liquid sample or separation liquid, through the opening into the tubular flow channel, or for pumping or pressing of liquid, such as liquid sample or separation liquid, through the additional opening into the tubular flow channel.

The flow generator may, for example, be connected indirectly to the tubular flow channel by a capillary, a tube, a valve, or an on-chip transportation channel, or combinations thereof.

The flow generator may be arranged to introduce sample by means of suction. For example, the flow generator may be arranged in direct or indirect connection with the additional opening, and thereby arranged for introducing for example sample into the tubular flow channel through the opening by suction.

The flow generator may be a pump, such as a syringe pump, a peristaltic pump or a pressure pump. The flow generator may also be a capillary or any other narrow channel or passage arranged in connection with the tubular flow channel such that liquid is introduced by means of capillary action.

The portable device may be a handheld device. Thus, for example, allowing the device to be handled by one hand, while the other hand of the user is free to be used for, for example, preparing of the sample or making adjustments to the device.

The opening may further be arranged to introduce separation liquid to the tubular flow channel, and thereby arranged to perform an action selected from the group consisting of: to condition the tubular flow channel, to separate DNA or RNA from other sample compounds, or to wash the bound DNA or RNA, and to release, or elute, separated DNA or RNA from the chitosan, or combinations thereof.

The separation liquid may be selected from the group consisting of: conditioning buffer, washing buffer, and elution buffer, or combinations thereof.

The portable device may comprise a flow controller switch or a loop, for introduction of liquids, such as separation liquid or sample liquid, into the chip or the tubular flow channel.

According to a second aspect, there is provided a method for manufacturing of a chip for separation of DNA or RNA from a liquid sample, the chip comprising: a base structure having a channel, the channel comprising a microstructure, and a cover member closing the channel and thereby forming the tubular flow channel, the method comprises providing the base structure made of PDMS; providing the cover member made of glass or PDMS; subjecting the base structure and the cover member to oxygen plasma, thereby removing hydrocarbons from the PDMS of the base structure and from the glass or PDMS of the cover member; contacting the base structure and the cover member such that a tubular flow channel is formed from the channel of the base member and the cover member, and thereby bonding the cover member to the base structure; and functionalizing the microstructure with chitosan with GPTMS as linker.

According to a third aspect, there is provided a chip for separation of DNA or RNA from a liquid sample, the chip comprising a tubular flow channel having an opening arranged for introducing a liquid sample into the tubular channel, wherein a separation surface of the tubular flow channel comprising a micro structure at least partially coated with chitosan for reversible binding of DNA or RNA of the liquid sample.

The chitosan may be bonded to the micro structure via a linking agent, preferably GPTMS.

The linking agent provides efficient coating of the microstructure with chitosan, and efficient separation of DNA or RNA.

The chip may comprise a base structure made of a material comprising PDMS, the base structure having a channel, and wherein a cover made of a material comprising glass or PDMS is bonded to the base structure such that a tubular flow channel is formed in the chip.

The separation surface may correspond to at least a part of or the whole of the surface of the tubular flow channel. Thus, the separation surface may comprise both surfaces of the base structure and the cover member.

Both surfaces of the base structure and of the cover member may be coated with chitosan.

The base structure of PDMS may comprise the microstructure holding the chitosan.

The chip may further comprise a bubble trap. Thus, undesired bubbles may be handled.

According to a fourth aspect, there is provided a use of the portable device according to the first aspect, for separation of DNA or RNA from a liquid sample. The separation may be of DNA from a liquid sample.

Further features of, and advantages with, the present invention will become apparent when studying the appended claims and the following description. The skilled person will realise that different features of the present invention may be combined to create embodiments other than those described in the following, without departing from the scope of the present invention. Features of one aspect may be relevant to anyone of the other aspects, references to these features are hereby made.

### Brief description of drawings

Figure 1 is a schematic illustration of a device according to an embodiment.
Figure 2 is a schematic illustration of a device according to an embodiment.
Figure 3A is a schematic top view illustration of a chip according to an embodiment.
Figure 3B is a schematic cross-sectional side view illustration of a chip according to figure 3A.
Figure 4 is a schematic illustration of a device according to an embodiment.
Figure 5 is a schematic illustration of DNA separation according to an embodiment.
Figure 6 is a schematic illustration of a method for manufacturing of a chip according to an embodiment.

### Detailed description

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

The use of chitosan, the microstructure of the separation surface, and the chip format of embodiments provides for efficient separation of DNA or RNA also from samples obtained from complex matrices. The chip format further provides for efficient portable devices.

The provided DNA or RNA extraction and purification, provides for efficient post amplification process of DNA or RNA, and provides for the possibility of obtaining efficient analysis of for example complex and/or highly processed food, environmental and clinical samples. The obtained efficient recovery of DNA or RNA and at the same time the removal of PCR inhibitors, which inhibitors could affect the efficiency of the PCR reaction or even completely inhibit the amplification of the DNA sequence of interest provides for efficient analysis of DNA or RNA. With embodiments, it is possible with efficient analysis even of oil samples in addition to the previously mentioned samples.

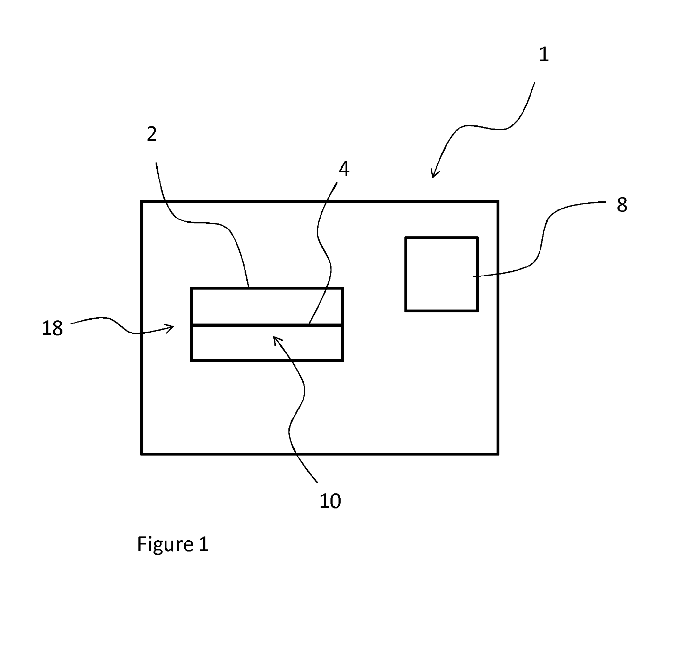

With reference to figure 1, a schematic illustration of the portable device 1 is illustrated. The portable device 1 comprises a chip 2 comprising a tubular flow channel 4 having an opening 18 arranged for introducing a liquid sample into the tubular flow channel 4, and a flow generator 8. A separation surface 10 of the tubular flow channel 4 is at least partially coated with chitosan (not visible in figure 1) for reversible binding of DNA or RNA of the liquid sample. The flow generator 8 is arranged for introducing the liquid sample through the opening 18 into the tubular flow channel 4, and introducing the liquid sample to the chitosan, such that DNA or RNA is reversibly bound to the chitosan.

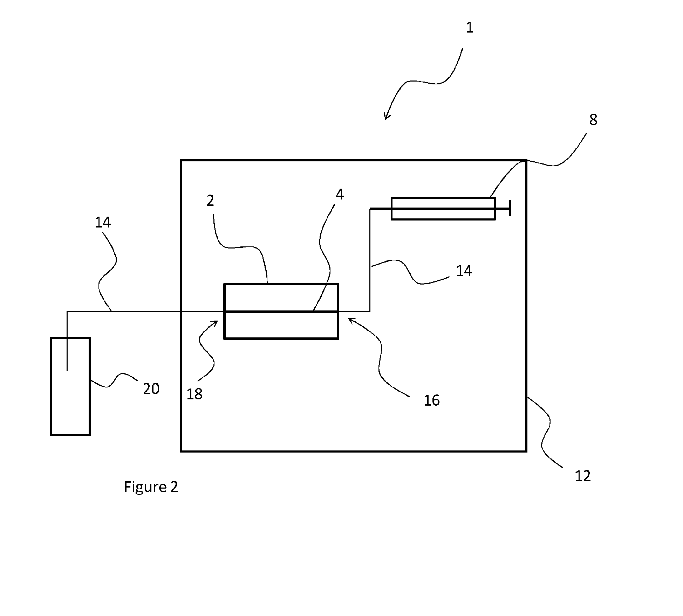

With reference to figure 2, a schematic illustration of a portable device 1 according to an embodiment is illustrated. The portable device 1 is a handheld device. The portable device 1 is incorporated in a housing 12. It is realised that it could alternatively be provided on, for example, a support structure. The portable device 1 further comprises a flow generator 8, in this example in the form of a syringe pump 8, and a chip 2. The syringe pump 8 is connected to an additional opening 16 of the flow channel 4 of the chip 2 by means of a piece of tubing 14, the piece of tubing 14 may be for example a piece of capillary. It is realised that the syringe pump 8 alternatively could have been connected directly to the additional opening 16. The syringe pump 8 can thus be used for pumping of fluids from the syringe pump 8 to the tubular flow channel 4 and for suction of fluids from the tubular flow channel 4 to the syringe pump 8. The chip 2 further has an opening 18, allowing fluid, such as liquid, to pass into or out of the tubular flow channel 4. In this example, a piece of tubing 14, for example a capillary, is connected to the opening 18. The piece of tubing 14 connected to the opening 18 may be used for introducing liquid sample into the tubular flow channel 4, for example by submerging the piece of tubing 14 in a tube 20 or other suitable vessel holding the liquid sample, and activating the syringe pump 8 to pump the liquid sample into the tubular flow channel 4 by suction. Separation liquids, such as buffers, can be introduced into the tubular flow channel 4 in a similar fashion. The syringe pump 8 can also be used for pumping, for example, separation liquids into the flow channel 4 via the additional opening 16.

It is realised that the tube 20 may be replaced by a well or small vessel integrated, such as suitably fabricated, on the chip 2. Although illustrated outside of the housing 12, it is realise that the tube 20, or other suitable vessels, may be positioned inside the housing 20.

The housing 12 may have openings for accessing the interior of the housing 12, such as for adjustments to the flow generator or replacement of the chip 2.

Although not illustrated in figure 2, the portable device 1 may further comprise an amplifier for amplifying the amount of DNA or RNA, and/or a detector for analysing DNA or RNA. The amplifier and/or the detector may be on the chip, or they may be separate units of the device 1.

Although not illustrated in figure 2, the tubular flow channel 4 of the chip 2 has a separation surface comprising a microstructure coated with chitosan. The separation surface in this example is the interior surface of the tubular separation channel 4, and the microstructure comprises pillars protruding from a bottom portion of the tubular flow channel 4 to a top portion of the tubular flow channel 4. The entire separation surface including the microstructure is coated with chitosan in this example.

The devices and chips according to embodiments may be used for separation and recovery of DNA or RNA from liquid samples, optionally followed by amplification and detection on or off the chip or device. The amplifier may be on the chip or off the chip. If amplification is not performed on the device, DNA or RNA eluted from the chip may be collected for optional further treatment off the device.

For amplification of DNA or RNA on the device, the device may comprise an amplifier. The amplifier may comprise tubes or channels and reservoirs for reagents and buffers, and arrangement for heat treatment. For example, the amplifier may be a continuous-flow microPCR system, or any other suitable amplifier, in which the DNA, obtained from the separation surface of the tubular flow channel, moves through fixed temperature zones to achieve suitable thermal-cycling. Several PCR reactions may be performed simultaneously in parallel channels. Thus, for example different target DNA or RNA, such as different plant species or different pathogens, may be detected from the same DNA or RNA extract. Another possibility include that the amplifier may be designed to perform an isothermal amplification, such as, for example, LAMP (Loop-mediated isothermal amplification) or RCA (Rolling Circle Amplification).

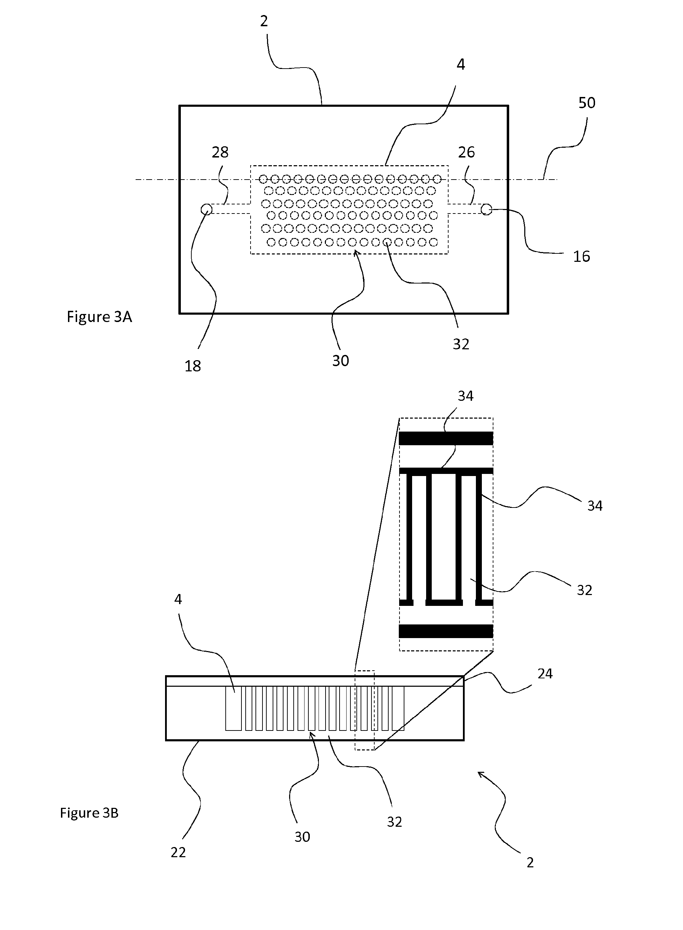

With reference to figures 3A and 3B, a chip 2 according to an embodiment is illustrated. Although the chip 2 is made of transparent material, for improving clarity, internal shapes or boarders of the chip 2 is illustrated in dashed lines in figure 3A. The chip 2 may be used, for example, together with the portable devices discussed with reference to figures 1 and 2. Figure 3A illustrates the chip 2 in a top view while figure 3B illustrates the chip 2 in a cross-sectional side view along line 50 of figure 3A with an inset illustrating the chitosan coated microstructure of the chip 2. The chip 2 comprises a base structure 22 made of PDMS, wherein the base structure 22 has a channel, and a cover 24 made of PDMS bonded to the base structure 22 such that the tubular flow channel 4 is formed in the chip 2. Instead of using a cover made of PDMS, a cover made of glass may be used. The tubular flow channel 4 has an opening 18 in a first portion and an additional opening 16 in a second portion, and channels 26, 28 on the chip for flowing of fluids to or from the tubular flow channel 4 (openings and channels 26, 28 are not visible in figure 3B). The base structure 22 comprises a microstructure 30 comprising rod shaped structures 32. To improve clarity all rod shaped structures 32 are not illustrated in the figures 3A and 3B, and they are not drawn to scale with the chip 2. It is noted that the heights of the microstructure essentially equals the height of the tubular flow channel 4, thereby providing robustness to the chip 2 and efficient binding of DNA or RNA. It is realised that the chip would function even with microstructures shorter than the height of the tubular flow channel. The illustrated tubular flow channel 4 has between a thousand and ten thousand rod shaped structures 32, although considerably fewer are illustrated in the figures in order to improve the clarity of the figures. The external dimensions of the chip 2 illustrated in figures 3A and 3B are approximately 80 mm by 30 mm by 4 mm (length by width by height) and the dimension of the tubular flow channel 50 mm by 10 mm by 0.05 mm (length by width by height). The separation surface, in this example the entire interior surface of the flow channel, is coated with chitosan bonded to the surface by linker GPTMS. Inset in figure 3B illustrates the chitosan 34 coating on surfaces of the tubular flow channel 4.

The pillars in the chip illustrated in figures 3A and 3B have diameters of about 15 micrometers, and heights of 50 micrometers, corresponding essentially to the height of the tubular flow channel.

The height of the pillars may be essentially equal to a height of the tubular flow channel.

The distance between two adjacent pillars may be in the range of 1 to 200 micrometers, such as 1 to 50 micrometers, for example 5 to 20 micrometers.

The chitosan coating is able to reversibly bind DNA or RNA, and therefore the chip 2 can be used to separate DNA or RNA from a sample. The sample would then be introduced in the conditioned chip 2, such that the DNA or RNA is bound to the chitosan. The sample introduction would suitably be followed by washing with a suitable buffer in order to remove contaminants and sample matrix while the DNA or RNA is remaining bound to the chitosan. Thereafter the DNA or RNA may be eluted with a suitable elution buffer such that the DNA or RNA is released from the chitosan. Eluted DNA or RNA can be collected on or off the chip and optionally amplified and detected. Washed DNA or RNA may also remain on the chitosan coating awaiting optional further treatment.

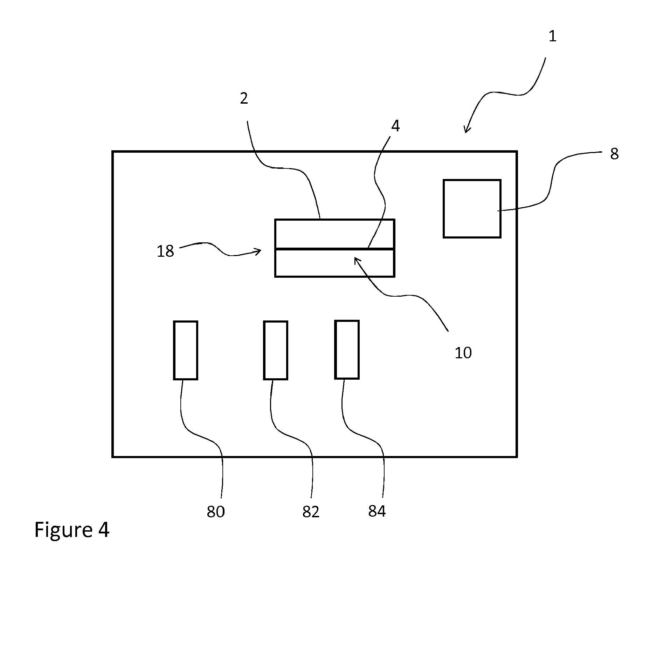

With reference to figure 4, a schematic illustration of the portable device 1, being a handheld device, is illustrated. The portable device 1 comprises a chip 2, a sample pre-treator 80 for removal of contaminants from the liquid sample, being a solid phase extractor, an amplifier 82 for amplifying the amount of DNA or RNA, a detector 84 for detecting or analysing DNA or RNA, and a flow generator 8. The chip 2 has a tubular flow channel 4 having an opening 18 arranged for introducing a liquid sample into the tubular flow channel 4, and a separation surface 10 of the tubular flow channel 4 coated with chitosan (not visible in figure 4) for reversible binding of DNA or RNA of the liquid sample. The chip 2 may be for example a chip discussed with reference to figures 3A and 3B. The sample pre-treator 80 is arranged for receiving the liquid sample which comprises DNA or RNA and contaminants, and for out-putting the liquid sample comprising DNA or RNA but depleted of contaminants. It is realised that if, for example, it is judged that the the liquid sample is not in need of removal of contaminants, the sample pre-treator 80 may be excluded. The liquid sample from the sample pre-treator 80 comprising DNA or RNA is introduced into the tubular flow channel 4 wherein DNA or RNA is further separated from contaminants and sample components as described previously. DNA or RNA is eluted from the tubular flow channel 4 and forwarded to the amplifier 82 wherein the DNA or RNA is amplified. It is realised that if, for example, it is judged that the DNA or RNA is not in need of amplification, the amplifier may be excluded. From the amplifier 82, the amplified DNA or RNA is forwarded and introduced to the detector 84, wherein the DNA or RNA may be detected and analysed. It is realised that the detector may be excluded and that the, optionally amplified, DNA or RNA may remain undetected on the device or collected from the device for further treatment, for example treatment by detection or analysis elsewhere. Although not illustrated in figure 4, the portable device 1 comprises tubings and arrangements for flow control, for example flow controller switche(s) or loop(s), for providing suitable liquid flows in the device by the flow generator 8. Thus, liquid flows to and/or from the chip 2, the sample pre-treator 80, the amplifier 82, the detector 84, and the flow generator 8 may be realised.

The sample pre-treator 80 is an efficient means for removing of contaminants from the sample liquid, such as sample matrix compounds, which provides several benefits including reduced risk for contaminating or clogging the tubular separation channel.

The sample pre-treator may be any suitable device or means for performing solid phase extraction in order to remove contaminants from the liquid sample. For example, it may be a solid phase extraction (SPE) column, such as a microSPE column, or other suitable pre-treators comprising a solid phase. Thus, it is realised that the column may refer to a column or a chip for SPE.

The sample pre-treator may be arranged for treating the liquid sample prior to the liquid sample being introduced into the tubular flow channel.

The sample pre-treator is thereby useful for cleaning the liquid sample such as by removing contaminants from the liquid sample. Thus, a cleaner sample liquid may be introduced into the flow channel of the chip, resulting in more efficient separation of DNA or RNA, and reduced risk of contaminating or clogging the tubular flow channel.

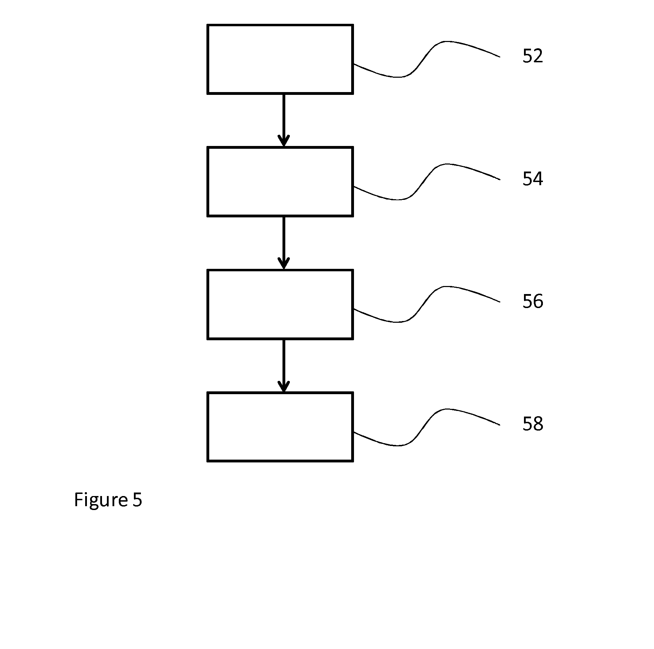

With reference to figure 5, an example with a protocol for DNA separation from a liquid sample will now be explained. Chips and devices as discussed with reference to figures 1 to 3A and 3B may be used for the separation. It is realised that other suitable separation liquids than the exemplified may be used still obtaining the desired separation.

This exemplified protocol, is based on pH-induced DNA capture and release on the chitosan functionalized microstructure discussed above with reference to figures 1 to 3A and 3B. A chip with rod-shaped micro structures was used in the example. The protocol involves using a controlled flow rate by either using a syringe pump, a peristaltic pump, a pressure pump or capillary-driven flow to circulate the following liquids in 4 differentiated steps:
- Conditioning 52: 10 mM MES buffer with pH 5.0 was pumped through the chip. The conditioning results in protonation of amino groups on the chitosan covalently bonded to the microstructures.
- DNA binding 54: A liquid sample containing DNA buffered with10 mM MES buffer with pH 5.0 was pumped through the tubular flow channel and thereby contacted with the chitosan functionalized microstructure, whereby DNA is efficiently bound through charge-charge interactions with the protonated chitosan at pH 5, while other components of the sample such as proteins are not retained.

- Washing 56: 10 mM MES buffer with pH 5.0 was pumped through the tubular flow channel whereby other components and unattached DNA was removed from the tubular flow channel.
- DNA elution 58: 10 Tris/KCl with pH 9.0 was pumped through the tubular flow channel thereby releasing DNA from the chitosan when the charge is neutralized at pH 9.

The thus obtained final DNA solution, eluted from the chitosan functionalized microstructure, can be used for PCR or other DNA amplification techniques and suitable detection applications, on the chip or off the chip; or on the device or off the device. The protocol may be used also for RNA separation.

In one example of using the protocol, a syringe pump 8 is used for suction of the liquids through the opening 18 into the tubular flow channel and out of the additional opening 16 towards the syringe pump 8 in steps 52, 54, and 56, and used for pumping of liquid in a flow direction from the syringe pump 8 towards the opening 18 in the step 58. Liquids are introduced in this example by means of a piece of tubing connected to the opening of the tubular flow channel and submerged in a vessel holding the liquid to be inserted for steps 52, 54, and 56, while for step 58, the syringe pump is loaded with the buffer for eluting DNA. It is realised that the presentation of liquids to or from the tubular flow channel may be suitably arranged in alternative fashions, such as by using suitable flow switch(es).

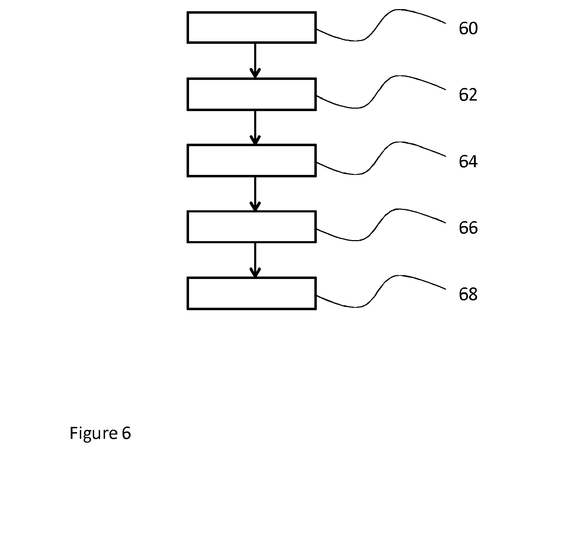

With reference to figure 6 manufacturing of a chip for separation of DNA or RNA from a liquid sample will now be described. The obtained chip is specifically suitable for entraping and concentrating the total DNA from a sample by the use of microscale solid phase extraction and a non-chaotrope-based nucleic acid extraction protocol. A poly(dimethylsiloxane) (PDMS) prototype was prepared that contains thousands of closely arranged micropillars or rod-shaped microstructures functionalized with chitosan. A very efficient DNA yield is obtained in analysis with the following fabrication process:
- Fabrication of a SU-8 master mold in silicon wafers through standard photolithography and/or DRIE 60.
- Preparation of PDMS replica base structure from the SU-8 master mold, obtained from the fabrication 60, 62.
- Use of oxygen plasma on the PDMS replica base structure and a glass or PDMS cover member slide to etch hydrocarbons and leaving silanol (SiOH) groups on the surface, rendering the surfaces hydrophilic, 64.
- Contacting the base structure and the cover member slide from the use of oxygen plasma 64 to form bridging Si-O-Si bond at the interface, thereby creating an irreversible seal 66.
- Functionalization with chitosan taking advantage of the surface activation performed by oxygen plasma. GPTMS is used as a linker to covalently bond the chitosan to the micropillars. 68.

The, thus obtained, chip having a microstructure with micro pillars was used in optimisation of DNA separations to study the best compromise between microstructure dimensions and arrangement and flow rate that yields the highest DNA enrichment. This approach overcomes the limitations of previously developed µSPE systems in PMMA in terms of providing a robust bonding that allows higher flow rates meaning faster processing, faster and more robust chitosan functionalization, and the potential upscaling through molding techniques.

The portable device may be a handheld device comprising
a chip comprising a tubular flow channel having an opening arranged for introducing a liquid sample into the tubular flow channel, and
a flow generator,
wherein a separation surface of the tubular flow channel comprises a microstructure coated with chitosan for reversible binding of DNA or RNA of the liquid sample, and the flow generator being arranged for introducing the liquid sample through the opening into the tubular flow channel, and introducing the liquid sample to the chitosan, such that DNA or RNA is reversibly bound to the chitosan, wherein
the portable device further comprises at least one of: a sample pre-treator for removal of contaminants from the liquid sample prior to introducing the liquid sample into the tubular flow channel; an amplifier arranged to amplify DNA or RNA eluted from the tubular flow channel; and a detector for qualitative or quantitative analysis of DNA or RNA eluted from the tubular flow channel or obtained from the amplifier.

The device may comprise a transceiver arranged to transmit and/or receive data. The transceiver may use electromagnetic fields to send or receive data from the device within a communication network.

The device may further comprise a data processing unit and a memory. The data processing unit may for example be arranged to process data obtained by the detector. The obtained data may be stored in the memory. The obtained data may further for example be compared to reference data stored in the memory. Alternatively, data resulting from detector and/or data pertaining to analysis of the liquid sample may be compared to externally stored reference data within a communication network which is accessible to the device via the transceiver. Obtained data from the device may further be sent from the device to an external device such as a computer via the communication network. An external data processing unit may be arranged outside the device but located within the communication network may further be used to process data obtained by the detector. The external data processing unit may for example be arranged in an external computer. The requirements of the device to process data are thereby reduced. The communication network may be a local area network, a LAN, an internet, or a telecommunication network. The communication within the communication network may be via wireless use of electromagnetic fields. Hence, data may be transferred in the communication network by standard protocols for transmitting digital data such as in a telecommunication network, wireless local area network, WLAN, or by Bluetooth technology. The communication network may comprise a cloud service. The device may further comprise a GPS, for example for positioning of a sampling location.

## Claims

1. A portable device for separation of DNA or RNA from a liquid sample, the portable device comprising
a chip comprising a tubular flow channel having an opening arranged for introducing a liquid sample into the tubular flow channel, and
a flow generator,
wherein
a separation surface of the tubular flow channel at least partially is coated with chitosan for reversible binding of DNA or RNA of the liquid sample, and
the flow generator being arranged for introducing the liquid sample through the opening into the tubular flow channel, and introducing the liquid sample to the chitosan, such that DNA or RNA is reversibly bound to the chitosan.

2. The portable device according to claim 1, wherein the separation surface comprises a microstructure coated with chitosan.

3. The portable device according to claim 2, wherein the microstructure comprises pillars.

4. The portable device according to anyone of claims 2 to 3, wherein a major part of the chip including the microstructure is made of PDMS.

5. The portable device according to anyone of the previous claims, wherein the portable device further comprises an amplifier arranged to amplify DNA or RNA eluted from the tubular flow channel.

6. The portable device according to anyone of the previous claims, wherein the portable device further comprises a detector for qualitative or quantitative analysis of DNA or RNA eluted from the tubular flow channel.

7. The portable device according to anyone of the previous claims, wherein the portable device further comprises a sample pre-treator for removal of contaminants from the liquid sample prior to introducing the liquid sample into the tubular flow channel.

8. The portable device according to anyone of the previous claims, wherein the opening is arranged in a first portion of the tubular flow channel, and the tubular flow channel further comprises an additional opening arranged in a second portion of the tubular flow channel.

9. The portable device according to claim 8, wherein the flow generator is connected to the additional opening.

10. A method for manufacturing of a chip for separation of DNA or RNA from a liquid sample, the chip comprising
a base structure having a channel, the channel comprising a microstructure, and
a cover member closing the channel and thereby forming the tubular flow channel, the method comprises
- providing the base structure made of PDMS,
- providing the cover member made of glass or PDMS,
- subjecting the base structure and the cover member to oxygen plasma, thereby removing hydrocarbons from the PDMS of the base structure and from the glass or PDMS of the cover member,
- contacting the base structure and the cover member such that a tubular flow channel is formed from the channel of the base member and the cover member, and thereby bonding the cover member to the base structure, and
- functionalizing the microstructure with chitosan with GPTMS as linker.

11. A chip for separation of DNA or RNA from a liquid sample, the chip comprising
a tubular flow channel having an opening arranged for introducing a liquid sample into the tubular channel, wherein
a separation surface of the tubular flow channel comprising a micro structure at least partially coated with chitosan for reversible binding of DNA or RNA of the liquid sample.

12. The chip according to claim 11, wherein the chitosan is bonded to the micro structure via a linking agent, preferably GPTMS.

13. Use of the portable device according to anyone of claims 1 to 9, for separation of DNA or RNA from a liquid sample.
